(19) Europäisches Patentamt
European Patent Office
Office européen des brevets

(11) EP 1 104 244 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**13.04.2022 Patentblatt 2022/15**

(45) Hinweis auf die Patenterteilung:
**12.10.2011 Patentblatt 2011/41**

(21) Anmeldenummer: **99944357.5**

(22) Anmeldetag: **10.08.1999**

(51) Internationale Patentklassifikation (IPC):
***A01N 57/20*** *(2006.01)* *A01N 47/38* *(2006.01)*
*A01N 47/30* *(2006.01)* *A01N 43/54* *(2006.01)*
*A01N 43/50* *(2006.01)* *A01N 43/18* *(2006.01)*
*A01N 37/40* *(2006.01)* *A01N 37/22* *(2006.01)*
*A01N 33/18* *(2006.01)*

(52) Gemeinsame Patentklassifikation (CPC):
(C-Sets verfügbar)
**A01N 57/20** (Forts.)

(86) Internationale Anmeldenummer:
**PCT/EP1999/005797**

(87) Internationale Veröffentlichungsnummer:
**WO 2000/008937 (24.02.2000 Gazette 2000/08)**

(54) **HERBIZIDE MITTEL FÜR TOLERANTE ODER RESISTENTE BAUMWOLLKULTUREN**
HERBICIDES FOR TOLERANT OR RESISTANT COTTON CULTURES
AGENTS HERBICIDES POUR CULTURES DE COTON TOLERANTES ET RESISTANTES

(84) Benannte Vertragsstaaten:
**AT BE CH CY DE DK ES FI FR GB GR IE IT LI LU MC NL PT SE**

(30) Priorität: **13.08.1998 DE 19836659**

(43) Veröffentlichungstag der Anmeldung:
**06.06.2001 Patentblatt 2001/23**

(60) Teilanmeldung:
**10010528.7 / 2 327 306**
**10010529.5 / 2 319 317**

(73) Patentinhaber: **Bayer CropScience AG**
**40789 Monheim am Rhein (DE)**

(72) Erfinder:
- **HACKER, Erwin**
  **D-65239 Hochheim (DE)**
- **BIERINGER, Hermann**
  **D-65817 Eppstein (DE)**
- **WILLMS, Lothar**
  **D-65719 Hofheim (DE)**

(74) Vertreter: **von Renesse, Dorothea et al**
**König-Szynka-Tilmann-von Renesse**
**Patentanwälte Partnerschaft mbB**
**Postfach 11 09 46**
**40509 Düsseldorf (DE)**

(56) Entgegenhaltungen:
**EP-A- 0 252 237 WO-A-95/05082**
**WO-A-96/22692 WO-A-96/32013**
**WO-A-97/36488 WO-A-98/09525**

- **DATABASE CABA [Online] Commonwealth Agricultural Bureau1998 ANDERSON, D. ET AL: "Field evaluation of cotton transformed for tolerance to imidazolinone herbicides" retrieved from STN Database accession no. 72171 XP002128109 & 1997 PROCEEDINGS BELTWIDE COTTON CONFERENCES, NEW ORLEANS, LA, USA, JANUARY 6-10, 1997: VOLUME 1, (1997) PP. 412-414. 2 REF. PUBLISHER: NATIONAL COTTON COUNCIL. MEMPHIS MEETING INFO.: 1997 PROCEEDINGS BELTWIDE COTTON CONFERENCES, NEW ORLEANS, LA, USA, J.G. Boswell Company, Corcoran, CA, USA.**
- **DATABASE CROPU [Online] Derwent International1999 WILCUT J W ET AL: "A regional evaluation of new technologies for weed management in conventional-tillage cotton." retrieved from STN Database accession no. 1999-82695 XP002128110 & PROC.SOUTH.WEED SCI.SOC. (51 MEET., 52-53, 1998) CODEN: SWSPBE,**
  **Univ.North-Carolina-State;Univ.Mississippi -State; Univ.Texas-A+M; Univ.Georgia; Univ.Florida**

- **DATABASE CROPU [Online] Derwent International1996 DOTRAY P A ET AL: "Lanceleaf sage (Salvia reflexa) and Venice mallow (Hibiscus trionum) control in cotton with herbicides applied preemergence and postemergence." retrieved from STN Database accession no. 1996-81471 XP002128111 & PROC.SOUTH.WEED SCI.SOC. (48 MEET., 14-15, 1995) CODEN: SWSPBE, Univ.Texas-Tech.**
- **DATABASE CROPU [Online] Derwent International1994 BAUMANN P A ET AL: "Venice Mallow (Hibiscus trionum) and Lanceleaf Sage (Salvia reflexa) Control in West Texas Cotton Cultures." retrieved from STN Database accession no. 1994-81168 XP002128112 & PROC.SOUTH.WEED SCI.SOC. (46, 32, 1993) CODEN: SWSPBE, Univ.Texas-Tech.**
- **DATABASE CROPU [Online] Derwent Interantional 1989 SHELBY P W ET AL: "Preplant Horseweed Control for No-Till Cotton and Soybeans." retrieved from STN Database accession no. 1989-81729 XP002128113 & PROC.SOUTH.WEED SCI.SOC. (41, 294, 1988) CODEN: SWSPBE,**
- **DATABASE CROPU [Online] Derwent International 1989 BLUMENFIELD T ET AL: "Systemic Grass-Killers for Selective Control of Johnson Grass and Bermuda Grass in Cotton." retrieved from STN Database accession no. 1989-81953 XP002128114 & PHYTOPARASITICA (16, NO. 4, 396, 1988) CODEN: PHPRA2,**
- **C TOMLIN (ED): "The Pesticide Manual, Tenth Edition" , FARNHAM, GB XP002099499 ISBN: 0-948404-79-5 Seite 1335 -Seite 1341**


Bemerkungen:

Die Akte enthält technische Angaben, die nach dem Eingang der Anmeldung eingereicht wurden und die nicht in dieser Patentschrift enthalten sind.

(52) Gemeinsame Patentklassifikation (CPC): (Forts.)

C-Sets

**A01N 57/20**

## Beschreibung

Die Erfindung liegt auf dem Gebiet der Pflanzenschutzmittel, die gegen Schadpflanzen in toleranten oder resistenten Kulturen von Baumwolle eingesetzt werden können und als Herbizidwirkstoffe eine Kombination von Herbiziden enthalten.

Mit der Einführung von toleranten oder resistenten Baumwollsorten und -linien, insbesondere von transgenen Baumwollsorten und -linien, wird das herkömmliche Unkrautbekämpfungssystem um neue, per se in herkömmlichen Baumwollsorten nichtselektive Wirkstoffe ergänzt. Die Wirkstoffe sind beispielsweise die bekannte breitwirksame Herbizide wie Glyphosate, Sulfosate, Glufosinate, Bialaphos und Imidazolinon-Herbizide [Herbizide (A)], die nunmehr in den jeweils für sie entwickelten toleranten Kulturen eingesetzt werden können. Die Wirksamkeit dieser Herbizide gegen Schadpflanzen in den toleranten Kulturen liegt auf einem hohen Niveau, hängt jedoch - ähnlich wie bei anderen Herbizidbehandlungen - von der Art des eingesetzten Herbizids, dessen Aufwandmenge, der jeweiligen Zubereitungsform, den jeweils zu bekämpfenden Schadpflanzen, den Klima- und Bodenverhältnissen, etc. ab. Ferner weisen die Herbizide Schwächen (Lücken) gegen spezielle Arten von Schadpflanzen auf. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbzide oder geographisch begrenzt auftreten können. Wirkungsverluste bei einzelnen Pflanzen lassen sich nur bedingt, wenn überhaupt, durch höhere Aufwandmengen der Herbizide ausgleichen. Außerdem besteht immer Bedarf für Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Synergistische Kombinationen von Glufosinate und Glyphosate mit anderen Herbiziden zur Unkrautbekämpfung in resistenten Baumwollkulturen sind an sich bekannt, etwa aus WO98/09525. Ähnliches wurde auch in EP-252237, WO96/32013, WO9622692 beschrieben. Mischungen von Glufosinate und Glyphosate mit anderen Herbiziden sind etwa auch aus WO99/45781 und WO97131535 bekannt.

Überraschenderweise wurde nun gefunden, daß Wirkstoffe aus der Gruppe der genannten breitwirksamen Herbizide (A) in Kombination mit bestimmten Herbiziden (B) in besonders günstiger Weise zusammenwirken, wenn sie in den Baumwollkulturen eingesetzt werden,die für die selektive Anwendung der erstgenannten Herbizide geeignet sind.

Gegenstand der Erfindung ist somit die Verwendung von Herbizid-Kombinationen zur Bekämpfung von Schadpflanzen in Baumwollkulturen, dadurch gekennzeichnet, dass die jeweilige Herbizid-Kombination einen wirksamen Gehalt an

(A) einem breitwirksamen Herbizid aus der Gruppe der Verbindungen, welche aus (A1) Verbindungen der Formel (A1),

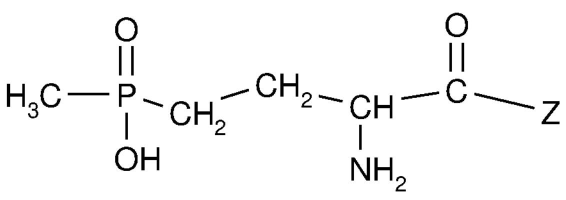

(A1)

worin Z einen Rest der Formel -OH oder einen Peptidrest der Formel $-NHCH(CH_3)CONHCH(CH_3)COOH$ bedeutet, und deren Salzen besteht,
und

(B) einem Herbizid aus der Gruppe der Verbindungen, welche aus

(B1) gegen monokotyle und überwiegend dikotyle Schadpflanzen wirksamen Herbiziden mit Blatt- und Bodenwirkung aus der Gruppe, Clomazone, Trifluralin, Linuron und Pendimethalin und/oder

(B2) gegen dikotyle Schadpflanzen wirksamen Herbiziden mit überwiegend Blattwirkung aus der Gruppe Bispyribac und dessen Salzen und Pyrithiobac und dessen Salzen und/oder

(B3) gegen monokotyle Schadpflanzen wirksamen Herbiziden mit überwiegend Blattwirkung aus der Gruppe Quizalofop-P-ethyl, Fenoxaprop-P-ethyl und Fluazifop-P-butyl, und/oder

(B4) gegen überwiegend monokotyle Schadpflanzen wirksamen Herbiziden mit Blatt- und Bodenwirkung aus der Gruppe Sethoxydim, Cycloxydim und Clethodim

besteht,

aufweist und die Baumwollkulturen gegenüber den in der Kombination enthaltenen Herbiziden (A) und (B), gegebenenfalls in Gegenwart von Safenern, tolerant sind.

Gegenstand der Erfindung ist außerdem die Verwendung von Herbizid-Kombinationen zur Bekämpfung von Schadpflanzen in Baumwollkulturen, dadurch gekennzeichnet, dass die jeweilige Herbizid-Kombination einen wirksamen Gehalt an

(A) dem breitwirksamen Herbizid Glyphosate-isopropylammonium
und

(B) einem Herbizid aus der Gruppe der Verbindungen, welche aus

(B1) gegen monokotyle und überwiegend dikotyle Schadpflanzen wirksamen Herbiziden mit Blatt- und Bodenwirkung aus der Gruppe, Clomazone, Linuron und/oder

(B3) gegen monokotyle Schadpflanzen wirksamen Herbiziden mit überwiegend Blattwirkung aus der Gruppe Quizalofop-P-ethyl, Fenoxaprop-P-ethyl und Fluazifop-P-butyl, und/oder

(B4) gegen überwiegend monokotyle Schadpflanzen wirksamen Herbiziden mit Blatt- und Bodenwirkung aus der Gruppe Cycloxydim, besteht,

aufweist und die Baumwollkulturen gegenüber den in der Kombination enthaltenen Herbiziden (A) und (B), gegebenenfalls in Gegenwart von Safenern, tolerant sind.

Neben den erfindungsgemäßen Herbizid-Kombinationen können weitere Pftanzenschutzmittetwirkstoffe und im Pflanzenschutz übliche Hilfsstoffe und Formulierungshilfsmittel verwendet werden.

Die synergistischen Wirkungen werden bei gemeinsamer Ausbringung der Wirkstoffe (A) und (B) beobachtet, können jedoch auch bei zeitlich getrennter Anwendung (Splitting) festgestellt werden. Möglich ist auch die Anwendung der Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die simultane Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In diese Systemanwendung können auch andere Pflanzenschutzmittel wie Fungizide, Insektizide, Akarizide etc. und/oder verschiedene Hilfsstoffe, Adjuvantien und/oder Düngergaben integriert werden.

Die synergistischen Effekte erlauben eine Reduktion der Aufwandmengen der Einzelwirkstoffe, eine höhere Wirkungsstärke gegenüber derselben Schadpflanzenart bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Bespielsweise werden durch die erfindungsgemäßen Kombinationen aus (A)+(B) synergistische Wirkungssteigerungen möglich, die weit und in unerwarteter Weise über die Wirkungen hinausgehen, die mit den Einzetwirkstoffen (A) und (B) erreicht werden.

In WO-A-98/09525 ist bereits ein Verfahren zur Bekämpfung von Unkräutern in transgenen Kulturen beschrieben, welche gegenüber phosphorhaltigen Herbiziden wie Glufosinate oder Glyphosate resistent sind, wobei Herbizid-Kombinationen eingesetzt werden, welche Glufosinate oder Glyphosate und mindestens ein Herbizid aus der Gruppe

Prosulfuron, Primisulfuron, Dicamba, Pyridate, Dimethenamid, Metolachlor, Flumeturon, Propaquizafop, Atrazin, Clodinafop, Norflurazone, Ametryn, Terbutylazin, Simazin, Prometryn, NOA-402989 (3-Phenyl- 4-hydroxy-6-chlorpyridazin), eine Verbindung der Formel

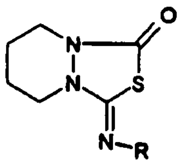

worin R = 4-Chlor-2-fluor-5-(methoxycarbonylmethylthio)-phenyl bedeutet, (bekannt aus US-A-4671819), CGA276854 = 2-Chlor-5-(3-methyl-2,6-dioxo-4-trifluormethyl-3,6-dihydro-2H-pyrimidin-1-yl)-benzoesäure-1-allyloxycarbonyl-1-methylethyl-ester (= WC9717, bekannt aus US-A-5183492) und 2-{N-[N-(4,6-Dimethylpyrimidin-2-yl)-aminocarbonyl]-aminosulfony}-benzoesäure-4-oxetanylester (bekannt aus EP-A-496701) enthalten.

Einzelheiten über die erzielbaren oder erzielten Effekte gehen aus der Druckschrift WO-A-98/09525 nicht hervor. Beispiele zu synergistischen Effekten oder zur Durchführung des Verfahrens in bestimmten Kulturen fehlen ebenso wie konkrete Kombinationen aus zwei, drei oder weiteren Herbiziden.

Aus DE-A-2856260 sind bereits einige Herbizid-Kombinationen mit Glufosinate oder L-Glufosinate und anderen Herbiziden wie Alloxidim, Linuron, MCPA, 2,4-D, Dicamba, Triclopyr, 2,4,5-T, MCPB und anderen bekannt.

Aus WO-A-92/08353 und EP-A 0 252 237 sind bereits einige Herbizid-Kombinationen mit Glufosinate oder Glyphosate und anderen Herbiziden aus der

Suffonylhamstoffreihe wie Metsulfuron-methyl, Nicosuffuron, Primisulfuron, Rimsulfuron u.a. bekannt.

Die Anwendung der Kombinationen zur Bekämpfung von Schadpflanzen ist in den Druckschriften nur an wenigen Pflanzenspezies oder aber an keinem Beispiel gezeigt worden.

In eigenen Versuchen wurde gefunden, daß überraschenderweise große Unterschiede zwischen der Verwendbarkeit der in WO-A-98/09525 und den anderen Druckschriften erwähnten Herbizid-Kombinationen und auch anderer neuartiger Herbizid-Kombinationen in Pflanzenkulturen bestehen.

Erfindungsgemäß werden Herbizid-Kombinationen bereitgestellt, die in toleranten Baumwollkulturen besonders günstig eingesetzt werden können.

Die Verbindungen der Formel (A1) sind bekannt oder können analog bekannten Verfahren hergestellt werden.

Die Formel (A1) umfaßt alle Stereoisomeren und deren Gemische, insbesondere das Racemat und das jeweils biologisch wirksame Enantiomere, z. B. L-Glufosinate und dessen Salze. Beispiele für Wirkstoffe der Formel (A1) sind folgende:

(A1.1) Glufosinate im engeren Sinne, d. h. D,L-2-Amino-4-[hydroxy(methyl)phosphinyl]-butansäure,

(A1.2) Glufosinate-monoammoniumsalz,

(A1.3) L-Glufosinate, L- oder (2S)-2-Amino-4-[hydroxy(methyl)phosphinyl]-butansäure (Phosphinothricin)

(A1.4) L-Glufosinate-monoammoniumsalz,

(A1.5) Bialaphos (oder Bilanafos), d.h. L-2-Amino-4-[hydroxy(methyl)phosphinyl]-butanoyl-L-alanyl-L-alanin, insbesondere dessen Natriumsalz.

Die genannten Herbizide (A1.1) bis (A1.5) werden über die grünen Teile der Pflanzen aufgenommen und sind als Breitspektrum-Herbizide oder Totalherbizide bekannt; sie sind Hemmstoffe des Enzyms Glutaminsynthetase in Pflanzen; siehe "The Pesticide Manual" 11th Edition, British Crop Protection Council 1997, S. 643-645 bzw. 120-121. Während ein Einsatzgebiet im Nachauflauf-Verfahren zur Bekämpfung von Unkräutern und Ungräsem in Plantagen-Kulturen und auf Nichtkulturland sowie mittels spezieller Applikationstechniken auch zur Zwischenreihenbekämpfung in landwirtschaftlichen Flächenkulturen wie Mais, Baumwolle u.a. besteht, nimmt die Bedeutung der Verwendung als selektive Herbizide in resistenten transgenen Pflanzenkulturen zu. Glufosinate wird üblicherweise in Form eines Salzes, vorzugsweise des Ammoniumsalzes eingesetzt. Das Racemat von Glufosinate bzw. Glufosinate-ammonium wird alleine üblicherweise in Dosierungen ausgebracht, die zwischen 50 und 2000 g AS/ha, meist 200 und 2000 g AS/ha (= g a.i./ha = Gramm Aktivsubstanz pro Hektar) liegen. Glufosinate ist in diesen Dosierungen vor allem dann wirksam, wenn es über grüne Pflanzenteile aufgenommen wird. Da es im Boden mikrobiell innerhalb weniger Tage abgebaut wird, hat es keine Dauerwirkung im Boden. Ähnliches gilt auch für den verwandten Wirkstoff Bialaphos-Natrium (auch Bilanafos-Natrium); siehe 'The Pesticide Manual" 11th Ed., British Crop Protection Council 1997 S. 120-121.

In den erfindungsgemäßen Kombinationen benötigt man in der Regel deutlich weniger Wirkstoff (A1), beispielsweise eine Aufwandmenge im Bereich von 20 bis 800, vorzugsweise 20 bis 600 Gramm Aktivsubstanz Glufosinate pro

Hektar (g AS/ha oder g a.i./ha). Entsprechende Mengen, vorzugsweise in Mol pro Hektar umgerechnete Mengen, gelten auch für Glufosinate-ammonium und Bialafos bzw. Bialafos-Natrium.

Die Kombinationen mit den blattwirksamen Herbiziden (A1) werden zweckmäßig in Baumwollkulturen eingesetzt, die gegenüber den Verbindungen (A1) resistent oder tolerant sind. Einige tolerante Baumwollkulturen, die gentechnisch erzeugt wurden, sind bereits bekannt und werden in der Praxis eingesetzt; vgl. Artikel in der Zeitschrift "Zuckerrübe" 47. Jahrgang (1998), S. 217 ff.; zur Herstellung transgener Pflanzen, die gegen Glufosinate resistent sind, vgl. EP-A-0242246, EP-A-242236, EP-A-257542, EP-A-275957, EP-A-0513054).

Erfindungsgemäß kann als A-Komponente auch Glyphosate-isopropylammonium eingesetzt werden (A2.2).

Glyphosate wird üblicherweise in Form eines Salzes, vorzugsweise des Monoisopropylammoniumsalzes oder des Trimethylsulfoxoniumsalzes (=Trimesiumsalzes = Sutfosate) eingesetzt. Bezogen auf die freie Säure Glyphosate liegt die Einzeldosierung im Bereich von 0,020-5 kg AS/ha, meist 0,5-5 kg AS/ha.

Glyphosate ist unter manchen anwendungstechnischen Aspekten dem Glufosinate ähnlich, jedoch ist es im Gegensatz dazu ein Hemmstoff für des Enzyms 5-Enolpyruvylshikimat-3-phosphat-Syntase in Pflanzen; siehe 'The Pesticide Manual" 11th Ed., British Crop Protection Council 1997 S.646-649. In den erfindungsgemäßen Kombinationen benötigt man in der Regel Aufwandmengen im Bereich von 20 bis 1000, vorzugsweise 20 bis 800 g AS/ha Glyphosate.

Auch für Verbindungen (A2) sind bereits gentechnisch erzeugte tolerante Pflanzen bekannt und in der Praxis eingeführt worden; vgl. "Zuckerrübe" 47. Jahrgang (1998), S. 217 ff.; vgl. auch WO 92/00377, EP-A-115673, EP-A-409815.

Als Kombinationspartner (B) für Verbindungen der Formel A1 kommen Verbindungen der Untergruppen (B1) bis (B4) in Frage:

(B1) Herbizide, die sowohl blattwirksam als auch bodenwirksam sind und gegen
Gräser und Dikotyle eingesetzt werden können, nämlich die folgenden Verbindungen (Angabe mit dem "common name" und der Referenzstelle aus "The Pesticide Manual" 11th Ed., British Crop Protection Council 1997, abgekürzt "PM"; im folgenden sind in Klammern auch bevorzugte Aufwandmengen angegeben):

(B1.7) Clomazone (PM, S. 256-257), d. h. 2-(2-Chlorbenzyl)-4,4-dimethyl-1,2-isoxazolidin-3-on (von 100-2000, insbesondere 150-1800 g AS/ha),

(B1.8) Trifluralin (PM, S. 1248-1250), d. h. 2,6-Dinitro-N,N-dipropyl-4-trifluormethyl-anilin (von 200-4000, insbesondere 300-3000 g AS/ha),

(B1.10) Linuron (PM, S. 751-753), d. h. 3-(3,4-Dichlorphenyl)-1-methoxy-1-methyl-harnstoff (von 500-5000, insbesondere 800-4000 g AS/ha),

(B1.12) Pendimethalin (PM, S. 937-939), d. h. N-(1-Ehylpropyl)-2,6-dinitro-3,4-xylidin (von 100-5000, insbesondere 450-4000 g AS/ha),

(B2) Herbizide, die gegen Dikotyle eingesetzt werden können aus der Gruppe

(B2.3) Bispyribac und dessen Salze, z. B. das Natriumsalz, (PM, S. 129-131), d. h. 2,6-Bis(4,6-dimethoxypyrimidin-2-yloxy)-benzoesäure (von 5-300, insbesondere 10-200 g AS/ha) und/oder gegebenenfalls

(B2.4) Pyrithiobac und dessen Salze, z. B. das Natriumsalz, (PM, S. 1073-1075), d. h. 2-Chlor-6-(4,6-dimethoxypyrimidin-2-ylthio)-benzoesäure-natriumsalz (von 5-300, insbesondere 10-200 g AS/ha),

(B3) Herbizide, die überwiegend blattwirksam sind und gegen monokotyle Schadpflanzen eingesetzt werden können aus der Gruppe:

(B3.1) Quizalofop-P-ethyl (PM, S. 1089-1092), d. h. (R)-2-[4-(6-Chlorchinoxalin-2-yloxy)-phenoxy]-propionsäure-ethylester (von 10-1500, insbesondere 20-1200 b AS/ha),

(B3.2) Fenoxaprop-P-ethylester (PM, S. 519-520), d. h. (R)-2-[4-(6-Chlorbenzoxazol-2-yloxy)-phenoxy]-propionsäure-ethylester (von 10-300, insbesondere 20-250 g

(B3.3) Fluazifop-P-butylester (PM, S. 556-557), d. h. (R)-2-[4-(5-Trifluormethyl-pyridyl-2-yloxy)-phenoxy]propionsäure bzw. -butylester (von 20-1500, insbesondere 30-1200 g AS/ha);

(B4) Herbizide, die sowohl blattwirksam als auch bodenwirksam sind und gegen monokotyle Schadpflanzen eingesetzt werden können, aus der Gruppe

(B4.1) Sethoxydim (PM, S. 1101-1103), d. h. (E,Z)-2-(1-Ethoxyiminobutyl)-5-(2-(ethylthio)-propyl)-3-hydroxy-cyclohex-2-enon (von 50-3000, insbesondere 100-2000 g AS/ha),

(B4.2) Cycloxydim (PM, S. 290-291), d. h. 2-(1-Ethoxyiminobutyl)-3-hydroxy-5-thian-3-ylcyclohex-2-enon (von 10-1000, insbesondere 30-800 g AS/ha),

(B4.3) Clethodim (PM, S. 250-251), d. h. 2-{(E)1-[(E)-3-Chlorallyloxyimino]-propyl}-5-[-2(ethylthio)-propyl]-3-hydroxy-cyclohex-2-enon (von 10-800, insbesondere 20-600 g AS/ha),

Als Kombinationspartner (B) für die Verbindungen A2.2 kommen Verbindungen der Untergruppen (B1) bis (B4) in Frage:

(B1) Herbizide, die sowohl blattwirksam als auch bodenwirksam sind und gegen
Gräser und Dikotyle eingesetzt werden können, nämlich die folgenden Verbindungen (Angabe mit dem "common name" und der Referenzstelle aus "The Pesticide Manual" 11th Ed., British Crop Protection Council 1997, abgekürzt "PM"; im folgenden sind in Klammern auch bevorzugte Aufwandmengen angegeben):

(B1.7) Clomazone (PM, S. 256-257), d. h. 2-(2-Chlorbenzyl)-4,4-dimethyl-1,2-isoxazolidin-3-on (von 100-2000, insbesondere 150-1800 g AS/ha),

(B1.10) Linuron (PM, S. 751-753), d. h. 3-(3,4-Dichlorphenyl)-1-methoxy-1-methyl-harnstoff (von 500-5000, insbesondere 800-4000 g AS/ha),
Herbizide, die überwiegend blattwirksam sind und gegen monokotyle Schadpflanzen eingesetzt werden können, aus der Gruppe:

(B3.1) Quizalofop-P-ethyl (PM, S. 1089-1092), d. h. (R)-2-[4-(6-Chlorchinoxalin-2-yloxy)-phenoxy]-propionsäure-ethylester (von 10-1500, insbesondere 20-1200 g AS/ha),

(B3.2) Fenoxaprop-P-ethylester (PM, S. 519-520), d. h. (R)-2-[4-(6-Chlorbenzoxazol-2-yloxy)-phenoxy]-propionsäure-ethylester (von 10-300, insbesondere 20-250 g AS/ha),

(B3.3) Fluazifop-P und dessen Ester wie der Butylester (PM, S. 556-557), d. h. (R)-2-[4-(5-Trifluormethyl-pyridyl-2-yloxy)-phenoxy]-propionsäure bzw. -butylester (von 20-1500, insbesondere 30-1200 g AS/ha);

(B4) Herbizide, die sowohl blattwirksam als auch bodenwirksam sind und gegen monokotyle Schadpflanzen eingesetzt werden können, aus der Gruppe

(B4.2) Cycloxydim (PM, S. 290-291), d. h. 2-(1-Ethoxyiminobutyl)-3-hydroxy-5-thian-3-ylcyclohex-2-enon (von 10-1000, insbesondere 30-800 g AS/ha),

Die Aufwandmengen der Herbizide (B) können von Herbizid zu Herbizid stark variieren. Als grobe Richtgröße können folgende Bereiche gelten:

Zu Verbindungen (B1): 50-7000 g AS/ha, vorzugsweise 20-5000 g AS/ha,
Zu Verbindungen (B2): 5-5000 g AS/ha, vorzugsweise 20-5000 g AS/ha, insbesondere 20-1200 g AS/ha,
Zu Verbindungen (B3): 10-1500 g AS/ha, vorzugsweise 5-500 g AS/ha,
Zu Verbindungen (B4): 10-3000 g AS/ha, vorzugsweise 5-1000 g AS/ha

Die Mengenverhältnisse der Verbindungen (A) und (B) ergeben sich aus den genannten Aufwandmengen für die Einzelstoffe und sind beispielsweise folgende Mengenverhältnisse von besonderem Interesse:

(A):(B) im Bereich von 400:1 bis 1:1000, vorzugsweise von 200:1 bis 1:100,
(A1):(B1) von 300:1 bis 1:400, vorzugsweise 200:1 bis 1:300, insbesondere 100:1 bis 1:50, ganz besonders von 50:1 bis 1:20,
(A1):(B2) von 500:1 bis 1:100, vorzugsweise von 100:1 bis 1:50, insbesondere von 50:1 bis 1:20,

(A1):(B3) von 400:1 bis 1:400, vorzugsweise von 200:1 bis 1:200, insbesondere von 200:1 bis 1:100,
(A1):(B4) von 200:1 bis 1:200, vorzugsweise von 200:1 bis 1:100, insbesondere von 100:1 bis 1:50,
(A2):(B1) von 200:1 bis 1:50, vorzugsweise 100:1 bis 1:50, insbesondere von 60:1 bis 1:20,
(A2):(B3) von 500:1 bis 1:100, vorzugsweise von 200:1 bis 1:100, insbesondere von 100:1 bis 1:50,
(A2):(B4) von 300:1 bis 1:100, vorzugsweise von 200:1 bis 1:70, insbesondere von 100:1 bis 1:50,

Von besonderem Interesse ist die Anwendung der Kombinationen

(A1.1) + (B1.7), (A1.1) + (B1.8), (A1.1) + (B1.10), (A1.1) + (B1.12),
(A1.2) + (B1.7),
(A1.2) + (B1.10), (A1.1) + (B1.12),
(A1.1) + (B2.3), (A1.1) + (B2.4),
(A1.2) + (B2.3), (A1.2) + (B2.4),
(A1.1) + (B3.1), (A1.1) + (B3.2), (A1.1) + (B3.3),
(A1.2) + (B3.1), (A1.2) + (B3.2), (A1.2) + (B3.3),
(A1.1) + (B4.1), (A1.1) + (B4.2), (A1.1) + (B4.3),
(A1.2) + (B4.1), (A1.2) + (B4.2), (A1.2) + (B4.3),
(A2.2) + (B1.7), (A2.2) + (B1.10), (A2.2) + (B2.4), (A2.2) + (B3.1), (A2.2) + (B3.2), (A2.2) + (B3.3),

Weiterhin können die erfindungsgemäßen Kombinationen zusammen mit anderen Wirkstoffen beispielsweise aus der Gruppe der Safener, Fungizide, Insektizide und Pflanzenwachstumsregulatoren oder aus der Gruppe der im Pflanzenschutz üblichen Zusatzstoffe und Formulierungshilfsmittel eingesetzt werden. Zusatzstoffe sind beispielsweise Düngemittel und Farbstoffe.

Bevorzugt sind Herbizid-Kombinationen aus einer Verbindung(A) mit einer Verbindung der Gruppe (B1) oder (B2) oder (B3) oder (B4).

Es sind auch solche Kombinationen erfindungsgemäß, den ennoche in oder mehre weitere Wirkstoffe anderer Struktur [Wirkstoffe (C)] zugesetzt werden wie

(A) + (B1) + (C), (A) + (B2) + (C), (A) + (B3) + (C) oder (A) + (B4) + (C),
(A) + (B1) + (B2) + (C), (A) + (B1) + (B3) + (C), (A) + (B1) + (B4) + (C),
(A) + (B2) + (B4) + (C), oder (A) + (B3) + (B4) + (C).

Für Kombinationen der letztgenannten Art mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind und bezüglich der betreffenden Zweierkombination.

Von besonderem Interesse ist auch die erfindungsgemäße Verwendung der Kombinationen mit dem Herbizid (A1.2) und einem Herbizid aus der Gruppe

(B1') Clomazone, Trifluralin, und/oder Pendimethalin und/oder
(B2') Bispyribac und/oder Pyrithiobac und/oder
(B3') Quizalofop-P-ethyl, Fenoxaprop-P-ethyl, Fluazifop-P-butyl und/oder
(B4') Sethoxydim, Cycloxydim und/oder Clethodim.

Von besonderem Interesse ist auch die erfindungsgemäße Verwendung der Kombinationen mit dem Herbizid (A2.2), Herbizid, einem Herbizid, aus der Gruppe

(B1') Clomazone, und/oder
(B3') Quizalofop-P-ethyl, Fenoxaprop-P-ethyl, Fluazifop-P-butyl und/oder
(B4') Cycloxydim

Bevorzugt sind dabei die Kombinationen aus der jeweiligen Komponente (A) mit einem Herbizid aus der Gruppe (B1'), (B2'), B3') oder (B4'). Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf- oder Nachauflaufverfahren ausgebracht werden. Bevorzugt ist die Anwendung im Nachauflaufverfahren oder im frühen Nachsaat-Vorauflaufverfahren.

Im einzelnen seien beispielhaft einige Vertreter der mono- und dikotylen Unkrautflora genannt, die durch die

erfindungsgemäßen Verbindungen kontrolliert werden können, ohne daß durch die Nennung eine Beschränkung auf bestimmte Arten erfolgen soll. Auf der Seite der monokotylen Unkrautarten werden z.B. Echinochloa spp., Setaria spp., Digitaria spp., Brachilisia spp., Sorghum spp. und Cynodon spp. gut erfaßt, aber auch Agropyron spp., Wildgetreideformen, Avena spp., Alopecurus spp., Lolium spp., Phalaris spp., Poa spp., sowie Cyperusarten und Imperata.

Bei dikotylen Unkrautarten erstreckt sich das Wirkungsspektrum auf Arten wie z.B. Chenopodium spp., Amaranthus spp., Solanum spp., Datura spp., Cupsella spp. und Cirsium spp.,
aber auch Abutilon spp., Chrysanthemum spp., Matricaria spp., Kochia spp., Veronica spp., Viola spp., Anthemis spp., Stellaria spp.,Thlaspi spp., Galium spp., Ipomoea spp., Lamium spp., Pharbitis spp., Sida spp., Sinapis spp., Convolvulus, Rumex und Artemisia.

Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich im Vergleich zu den Einzelpräparaten durch eine schneller einsetzende und länger andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden können, daß ihre Bodenwirkung optimal ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht

Bei der gemeinsamer Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsem, einen schnelleren Eintritt der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen in der Kulturpflanze, wie Stickstoff oder Olsäure, reduziert.

Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäßen Verbindungen eine ausgezeichnete herbizide Aktivität gegenüber mono- und dikotylen Unkräutern aufweisen, werden die toleranten bzw. kreuztoleranten Baumwollpflanzen nur unwesentlich oder gar nicht geschädigt. Darüberhinaus weisen die erfindungsgemäßen Mittel teilweise hervorragende wachstumsregulatorische Eigenschaften bei den Baumwollpflanzen auf. Sie greifen regulierend in den pflanzeneigenen Stoffwechsel ein und können damit zur gezielten Beeinflussung von Pflanzeninhaltsstoffen eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten toleranten oder kreuztoleranten Baumwollkulturen oder noch zu entwickelnden toleranten oder gentechnisch veränderten Baumwollkulturen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Ölgehalt oder veränderter Qualität, z. B. anderer Fettsäurezusammensetzung des Emteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),

- transgene Kulturpflanzen, welche Resistenzen gegen andere Herbizide aufweisen, beispielsweise gegen Sulfonylhamstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, 'Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen.

So sind transgene Pflanzen erhältlich, die veränderte Eigenschaften durch Überexpression. Suppression oder Inhibierung homologer (= natürlicher) Gene oder Gensequenzen oder Expression heterologer (= fremder) Gene oder Gensequenzen aufweisen.

Gegenstand der Erfindung ist deshalb auch ein Verfahren zur Bekämpfung von unerwünschtem Pflanzenwuchs in toleranten Baumwollkulturen, dadurch gekennzeichnet, daß man ein Herbizide des Typs (A) mit einem Herbiziden des Typs (B) auf die Schadpflanzen, Pflanzenteile davon oder die Anbaufläche appliziert.

Gegenstand der Erfindung sind auch die neuen Kombinationen aus Verbindungen (A)+(B) und diese enthaltende herbizide Mittel.

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley

& Sons, N.Y. Marsden, "Solvents Guide", 2nd Ed., Interscience, N.Y. 1950; McCutcheon's, "Detergents and Emulsfiers Annual", MC Publ. Corp., Ridegewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenem, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthatin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure CalciumSalze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirtcstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischem und Extrusion ohne festes Inertmaterial hergestellt.

Die agrochemischen Zubereitungen enthalten in der Regel 0,1 bis 99 Gewidttsprozent, insbesondere 2 bis 95 Gew.-%, Wirkstoffe der Typen A und/oder B, wobei je nach Formulierungsart folgende Konzentrationen üblich sind:

In Spritzpulvem beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen.

Stabförmige Formulierungen enthalten meistens 5 bis 20 Gew.-% an Wiricstoff, versprühbare Lösungen etwa 0,2 bis 25 Gew.-% Wirkstoff.

Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Beispielsweise ist bekannt, daß die Wirkung von Glufosinate-ammonium (A1.2) ebenso wie die seines L-Enantiomeren durch oberflächenaktive Substanzen verbessert werden kann, vorzugsweise durch Netzmittel aus der Reihe der Alkyl-polyglykolethersulfate, die beispielsweise 10 bis 18 C-Atomen enthalten und in Form ihrer Alkali- oder Ammoniumsalze, aber auch als Magnesiumsalz verwendet werden, wie $C_{12}/C_{14}$-Fettalkohol-diglykolethersulfat-Natrium (®Genapol LRO, Hoechst); siehe EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Weiterhin ist bekannt, daß Alkylpolyglykolethersulfate auch als Penetrationshilfsmittel und Wirkungsverstärker für eine Reihe anderer Herbizide, unter anderem auch für Herbizide aus der Reihe der Imidazolinone geeignet sind; siehe EP-A-0502014.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A Formulierungsbeispiele allgemeiner Art

a) Ein Stäubemittel wird erhalten, indem man 10 Gew.-Teile eines Wirkstoffs/Wirksstoffgemischs und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines WirkstoffsNVirksstoffgemischs, 64 Gew.-Teile kaolinhaltigen Quarz als Inertstoff, 10 Gew.-Teile ligninsulfonsaures Kalium und 1 Gew.-Teit oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277 C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man

75 Gew.-Teile eines Wirkstoffs/Wirksstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin
mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man 25 Gew.-Teile eines Wirkstoffs/Wirksstoffgemischs,

5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

Biologische Beispiele

1. Unkrautwirkung im Vorauflauf

Samen bzw. Rhizomstücke von mono- und dikotylen Unkrautpflanzen werden in Papptöpfen in sandiger Lehmerde ausgelegt und mit Erde abgedeckt. Die in Form von konzentrierten wäßrigen Lösungen, benetzbaren Pulvern oder Emulsionskonzentraten formulierten Mittel werden dann als wäßrige Lösung, Suspension bzw. Emulsion mit einer Wasseraufwandmenge von umgerechnet 600 bis 800 l/ha in unterschiedlichen Dosierungen auf die Oberfläche der Abdeckerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflaufen der Versuchspflanzen nach einer Versuchszeit von 3 bis 4 Wochen im Vergleich zu unbehandelten Kontrollen. Wie die Testergebnisse zeigen, weisen die erfindungsgemäßen Mittel eine gute herbizide Vorauflaufwirksamkeit gegen ein breites Spektrum von Ungräsem und Unkräutern auf.

Dabei werden häufig Wirkungen der erfindungsgemäßen Kombinationen beobachtet, die die formale Summe der Wirkungen bei Einzelapplikation der Herbizide übertreffen (= synergistische Wirkung).

Wenn die beobachteten Wirkungswerte bereits die formale Summe (= $E^A$) der Werte zu den Versuchen mit Einzelapplikationen übertreffen, dann übertreffen sie den Erwartungswert nach Colby (= $E^C$) ebenfalls, der sich nach folgender Formel errechnet und ebenfalls als Hinweis auf Synergismus angesehen wird (vgl. S. R. Colby; in Weeds 15 (1967) S. 20 bis 22):

$$E = A+B-(A\cdot B/100)$$

Dabei bedeuten: A, B = Wirkung der Wirkstoffe A bzw. in % bei a bzw. b g AS/ha; E = Erwartungswert in % bei a+b g AS/ha. Die beobachteten Werte der Versuche zeigen bei geeigneten niedrigen Dosierungen eine Wirkung der Kombinationen, die über den Erwartungswerten nach Colby liegen.

2. Unkrautwirkung im Nachauflauf

Samen bzw. Rhizomstücke von mono- und dikotylen Unkräutern werden in Papptöpfen in sandigem Lehmboden ausgelegt, mit Erde abgedeckt und im Gewächshaus unter guten Wachstumsbedingungen angezogen. Drei Wochen nach der Aussaat werden die Versuchspflanzen im Dreiblattstadium mit den erfindungsgemäßen Mitteln behandelt. Die als Spritzpulver bzw. als Ernulsionskonzentrate formulierten erfindungsgemäßen Mittel werden in verschiedenen Dosierungen mit einer Wasseraufwandmenge von umgerechnet 600 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine gute herbizide Wirksamkeit gegen ein breites Spektrum wirtschaftlich wichtiger Ungräser und Unkräuter auf.

Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby (vgl. Bonitur in Beispiel 1) liegen.

3. Herbizide Wirkung und Kulturpflanzenverträglichkeit (Feldversuch)

Pflanzen von transgener Baumwolle mit einer Resistenz gegen ein oder mehrere Herbizide (A) wurden zusammen mit typischen Unkrautpflanzen im Freiland auf Parzellen der Größe 2 x 5m unter natürlichen Freilandbedingungen herangezogen; alternativ stellte sich beim Heranziehen der Baumwollpflanzen die Verunkrautung natürlich ein. Die Behandlung mit den erfindungsgemäßen Mitteln und zur Kontrolle separat mit alleiniger Applikation der Komponentenwirkstoffe erfolgte unter Standardbedingungen mit einem Parzellen-Spritzgerät bei einer Wasseraufwandmenge von 200-300 Liter je Hektar in Parallelversuchen gemäß dem Schema aus Tabelle 1, d. h. im Vorsaat-Vorauflauf, im Nachsaat-Vorauflauf oder im Nachauflauf im frühen, mittleren oder späten Stadium.

Tabelle 1: Anwendungsschema - Beispiele

| Applikation der Wirkstoffe | Vorsaat | Vorauflauf nach Saat | Nachauflauf 1-2-Blatt | Nachauflauf 2-4-Blatt | Nachauflauf 6-Blatt |
|---|---|---|---|---|---|
| kombiniert | (A)+(B) | | | | |
| " | | (A)+(B) | | | |
| " | | | (A)+(B) | | |
| " | | | | (A)+(B) | |
| " | | | | | (A)+(B) |
| sequentiell | (A) | | (B) | | |

(fortgesetzt)

| Applikation der Wirkstoffe | Vorsaat | Vorauflauf nach Saat | Nachauflauf 1-2-Blatt | Nachauflauf 2-4-Blatt | Nachauflauf 6-Blatt |
|---|---|---|---|---|---|
| " | | (A) | (B) | | |
| " | | (A) | | (B) | |
| " | | (A) | (A) | (B) | |
| " | | (A) | | (B) | (B) |
| " | | (A) | | (A)+(B) | |
| " | (B) | | (A) | | |
| " | | (B) | | (A)+(B) | |
| " | (A)+(B) | | (A)+(B) | | |
| " | (A)+(B) | (A)+(B) | (A)+(B) | | |
| " | | (A)+(B) | (A)+(B) | | |
| " | | (A)+(B) | (A)+(B) | (A)+(B) | |
| " | | (A)+(B) | (A)+(B) | (A)+(B) | (A)+(B) |
| " | | | (A)+(B) | (A)+(B) | |
| " | | | (A)+(B) | (A)+(B) | (A)+(B) |
| " | | | | (A)+(B) | (A)+(B) |

Im Abstand von 2, 4, 6 und 8 Wochen nach Applikation wurde die herbizide Wirksamkeit der Wirkstoffe bzw. Wirkstoffmischungen anhand der behandelten Parzellen im Vergleich zu unbehandelten Kontroll-Parzellen visuell bonitiert. Dabei wurde Schädigung und Entwicklung aller oberirdischen Pflanzenteile erfaßt Die Bonitierung erfolgte nach einer Prozentskala (100% Wirkung = alle Pflanzen abgestorben; 50 % Wirkung = 50% der Pflanzen und grünen Pflanzenteile abgestorben; 0 % Wirkung = keine erkennbare Wirkung = wie Kontrollparzelle. Die Boniturwerte von jeweils 4 Parzellen wurden gemittelt.

Der Vergleich zeigte, daß die erfindungsgemäßen Kombinationen meist mehr, teilweise erheblich mehr herbizide Wirkung aufweisen als die Summe der Wirkungen der Einzelherbizide. Die Wirkungen lagen in wesentlichen Abschnitten des Boniturzeitraums über den Erwartungswerten nach Colby (vgl. Bonitur in Beispiel 1) und weisen deshalb auf einen Synergismus hin. Die Baumwollpflanzen dagegen wurden infolge der Behandlungen mit den herbiziden Mitteln nicht oder nur unwesentlich geschädigt.

In den nachfolgenden Tabellen allgemein verwendete Abkürzungen:

g AS/ha = Gramm Aktivsubstanz (100 % Wirkstoff) pro Hektar
$E^A$ = Summe der herbiziden Wirkungen der Einzelapplikationen
$E^C$ = Erwartungswert nach Colby (vgl. Bonitur zu Tabelle 1)

Tabelle 2: Herbizide Wirkung im Feldversuch in Baumwolle

| Wirkstoff(e) | Dosis[1)] g AS/ha | Herbizide Wirkung[2)] (%) gegen Sorghum halepense |
|---|---|---|
| (A1.2) | 500<br>300 | 53<br>15 |
| (B4.2) | 125 | 58 |
| (A1.2)+(B4.2) | 300+125 | 100 (E = 73) |

Abkürzungen zu Tabelle 2:
1) = Applikation im 4-Blattstadium  2) = Bonitur 30 Tage nach Applikation
(A1.2) = Glufosinate-ammonium
(B4.2) = CyGoxydim

Die behandelte Baumwollkultur zeigte keine wesentlichen Schäden.

Tabelle 3: Herbizide Wirkung im Feldversuch in Baumwolle

| Wirkstoff(e) | Dosis[1)] g AS/ha | Herbizide Wirkung[2)] (%) gegen Ipomoea hederacea |
|---|---|---|
| (A1.2) | 600<br>400 | 75<br>43 |
| (B1.12) | 925 | 42 |
| (A1.2) + (B1.12) | 400 + 925 | 100 ($E^A$ = 85) |
| (B2.4) | 105 | 42 |
| (A1.2) + (B2.4) | 400 + 105 | 95 ($E^A$ = 85) |

Abkürzungen zu Tabelle 3.
[1)] = Applikation im 4-Blattstadium; [2)] = Bonitur 23 Tage nach Applikation
(A1.2) = Glufosinate-ammonium; (B1.12) = Pendimethalin
(B2.4) = Pyrithiobac

## Patentansprüche

1. Verwendung von Herbizid-Kombinationen zur Bekämpfung von Schadpflanzen in Baumwollkulturen, **dadurch gekennzeichnet, dass** die jeweilige Herbizid-Kombination einen wirksamen Gehalt an

   (A) einem breitwirksamen Herbizid aus der Gruppe der Verbindungen, welche aus

   (A1) Verbindungen der Formel (A1),

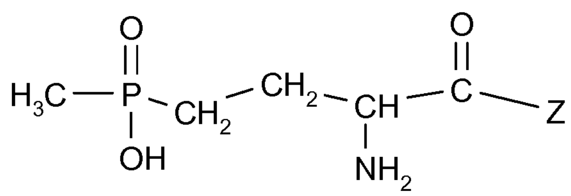

(A1)

worin Z einen Rest der Formel -OH oder einen Peptidrest der Formel $-NHCH(CH_3)CONHCH(CH_3)COOH$ bedeutet, und deren Salzen besteht,
und

   (B) einem Herbizid aus der Gruppe der Verbindungen, welche aus

   (B1) gegen monokotyle und überwiegend dikotyle Schadpflanzen wirksamen Herbiziden mit Blatt- und Bodenwirkung aus der Gruppe, Clomazone, Trifluralin, Linuron und Pendimethalin und/oder
   (B2) gegen dikotyle Schadpflanzen wirksamen Herbiziden mit überwiegend Blattwirkung aus der Gruppe Bispyribac und dessen Salzen und Pyrithiobac und dessen Salzen und/oder
   (B3) gegen monokotyle Schadpflanzen wirksamen Herbiziden mit überwiegend Blattwirkung aus der Gruppe Quizalofop-P-ethyl, Fenoxaprop-P-ethyl und Fluazifop-P-butyl, und/oder
   (B4) gegen überwiegend monokotyle Schadpflanzen wirksamen Herbiziden mit Blatt- und Bodenwirkung aus der Gruppe Sethoxydim, Cycloxydim und Clethodim
   besteht,

   aufweist und die Baumwollkulturen gegenüber den in der Kombination enthaltenen Herbiziden (A) und (B), gegebenenfalls in Gegenwart von Safenern, tolerant sind.

2. Verwendung von Herbizid-Kombinationen zur Bekämpfung von Schadpflanzen in Baumwollkulturen, **dadurch gekennzeichnet, dass** die jeweilige Herbizid-Kombination einen wirksamen Gehalt an

(A) dem breitwirksamen Herbizid Glyphosate-isopropylammonium
und
(B) einem Herbizid aus der Gruppe der Verbindungen, welche aus

(B1) gegen monokotyle und überwiegend dikotyle Schadpflanzen wirksamen Herbiziden mit Blatt- und Bodenwirkung aus der Gruppe, Clomazone, Linuron und/oder
(B3) gegen monokotyle Schadpflanzen wirksamen Herbiziden mit überwiegend Blattwirkung aus der Gruppe Quizalofop-P-ethyl, Fenoxaprop-P-ethyl und Fluazifop-P-butyl, und/oder
(B4) gegen überwiegend monokotyle Schadpflanzen wirksamen Herbiziden mit Blatt- und Bodenwirkung aus der Gruppe Cycloxydim, besteht,

aufweist und die Baumwollkulturen gegenüber den in der Kombination enthaltenen Herbiziden (A) und (B), gegebenenfalls in Gegenwart von Safenern, tolerant sind.

3. Verwendung nach Anspruch 1, **dadurch gekennzeichnet, dass** als Wirkstoff (A) Glufosinate und dessen Salze ausgewählt ist.

4. Verwendung nach Anspruch 1 oder 3, **dadurch gekennzeichnet, dass** als Wirkstoff (A) Glufosinate-ammonium eingesetzt wird.

5. Verwendung nach einem der Ansprüche 1 bis 4, **dadurch gekennzeichnet, dass** die Herbizid-Kombination weitere Pflanzenschutzmittelwirkstoffe enthält.

6. Verwendung nach einem der Ansprüche 1 bis 5, **dadurch gekennzeichnet, dass** die Herbizid-Kombinationen zusammen mit im Pflanzenschutz üblichen Hilfsstoffen und Formulierungshilfsmitteln verwendet werden.

7. Verfahren zur Bekämpfung von Schadpflanzen in toleranten Baumwollkulturen, **dadurch gekennzeichnet, dass** man die Herbizide der Herbizid-Kombination, definiert gemäß einem oder mehreren der Ansprüche 1 bis 6, gemeinsam oder getrennt im Vorauflauf, Nachauflauf oder im Vor- und Nachauflauf auf die Pflanzen, Pflanzenteile, Pflanzensamen oder die Anbaufläche appliziert.

8. Herbizide Zusammensetzung, **dadurch gekennzeichnet, dass** sie neben einem Herbizid (A) aus der Gruppe der Verbindungen der Formel (A1),

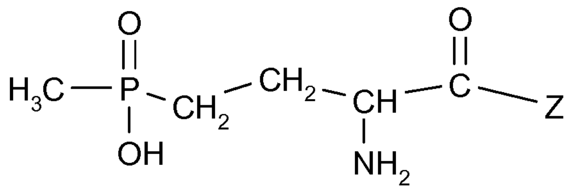

(A1)

worin Z einen Rest der Formel -OH oder einen Peptidrest der Formel $-NHCH(CH_3)CONHCH(CH_3)COOH$ bedeutet, und deren Salzen, einen Herbizidwirkstoff (B) aus der Gruppe enthält, die aus

(B2') gegen dikotyle Schadpflanzen wirksamen Herbiziden mit überwiegend Blattwirkung aus der Gruppe Bispyribac und dessen Salzen und Pyrithiobac und dessen Salzen und/oder
(B3') gegen monokotyle Schadpflanzen wirksamen Herbiziden mit überwiegend Blattwirkung aus der Gruppe Quizalofop-P-ethyl

besteht, und gegebenenfalls im Pflanzenschutz übliche Zusatzstoffe und Formulierungshilfsmittel enthält.

## Claims

1. Use of herbicide combinations for controlling harmful plants in cotton crops, **characterized in that** the herbicide combination in question has an active content of

(A) a broad-spectrum herbicide from the group of the compounds which consists of

(A1) compounds of the formula (A1)

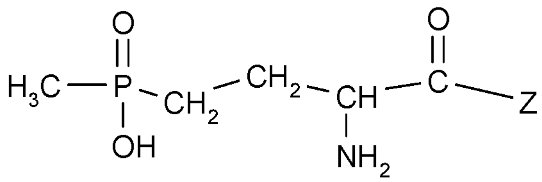

(A1)

in which Z is a radical of the formula -OH or a peptide radical of the formula $-NHCH(CH_3)CONH-CH(CH_3)COOH$, and their salts, and

(B) a herbicide from the group of the compounds which consists of

(B1) foliar- and soil-acting herbicides which are effective against monocotyledonous and predominantly dicotyledonous harmful plants, from the group of clomazone, trifluralin, linuron and pendimethalin and/or
(B2) predominantly foliar-acting herbicides which are effective against dicotyledonous harmful plants, from the group of bispyribac and the salts thereof and pyrithiobac and the salts thereof and/or
(B3) predominantly foliar-acting herbicides which are effective against monocotyledonous harmful plants, from the group of quizalofop-P-ethyl, fenoxaprop-P-ethyl and fluazifop-P-butyl, and/or
(B4) foliar- and soil-acting herbicides which are effective against predominantly monocotyledonous harmful plants, from the group of sethoxydim, cycloxydim and clethodim,

and the cotton crops are tolerant to the herbicides (A) and (B) contained in the combination, if appropriate in the presence of safeners.

**2.** Use of herbicide combinations for controlling harmful plants in cotton crops, **characterized in that** the herbicide combination in question has an active content of

(A) the broad-spectrum herbicide glyphosate-isopropylammonium
and
(B) a herbicide from the group of the compounds which consists of

(B1) foliar- and soil-acting herbicides which are effective against monocotyledonous and predominantly dicotyledonous harmful plants, from the group of clomazone, linuron and/or
(B3) predominantly foliar-acting herbicides which are effective against monocotyledonous harmful plants, from the group of quizalofop-P-ethyl, fenoxaprop-P-ethyl and fluazifop-P-butyl, and/or
(B4) foliar- and soil-acting herbicides which are effective against predominantly monocotyledonous harmful plants, from the group of cycloxydim,

and the cotton crops are tolerant to the herbicides (A) and (B) contained in the combination, if appropriate in the presence of safeners.

**3.** Use according to Claim 1, **characterized in that** glufosinate and the salts thereof are chosen as active substance (A).

**4.** Use according to Claim 1 or 3, **characterized in that** glufosinate-ammonium is employed as active substance (A).

**5.** Use according to any of Claims 1 to 4, **characterized in that** the herbicide combination comprises other crop protection active ingredients.

**6.** Use according to any of Claims 1 to 5, **characterized in that** the herbicide combinations are used together with adjuvants and formulation auxiliaries conventionally used in crop protection.

**7.** Method of controlling harmful plants in tolerant cotton crops, **characterized in that** the herbicides of the herbicide combination, as defined in one or more of Claims 1 to 6, are applied jointly or separately, pre-emergence, post-emergence or pre- and post-emergence, to the plants, parts of the plants, seeds of the plants or the area under

cultivation.

**8.** Herbicidal composition, **characterized in that** it comprises, in addition to a herbicide (A) from the group of the compounds of the formula (A1),

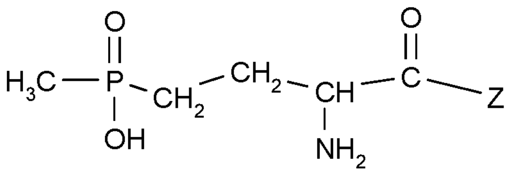

(A1)

in which Z is a radical of the formula -OH or a peptide radical of the formula $-NHCH(CH_3)CONHCH(CH_3)COOH$, and their salts, a herbicidal active substance (B) from the group which consists of

(B2') predominantly foliar-acting herbicides which are effective against dicotyledonous harmful plants, from the group of bispyribac and the salts thereof and pyrithiobac and the salts thereof and/or
(B3') predominantly foliar-acting herbicides which are effective against monocotyledonous harmful plants, from the group of quizalofop-P-ethyl,

and, if appropriate, additives and formulation auxiliaries customary in crop protection.

## Revendications

**1.** Utilisation d'associations d'herbicides pour la lutte contre des plantes nuisibles dans des cultures de coton, **caractérisée en ce que** l'association d'herbicides respective présente une teneur efficace en

(A) un herbicide à large spectre choisi dans le groupe des composés qui consiste en
(A1) des composés de formule (Al),

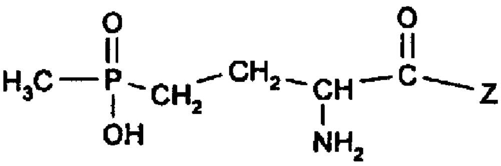

**(A1)**

dans laquelle Z représente un radical de formule -OH ou un radical peptidique de formule-$NHCH(CH_3)CONHCH(CH_3)COOH$, et leurs sels,
et
(B) un herbicide choisi dans le groupe des composés qui consiste en

(B1) des herbicides actifs contre des plantes nuisibles monocotylédones et surtout dicotylédones, à action sur les feuilles et sur le sol, choisis dans le groupe constitué par la clomazone, la trifluraline, le linuron et la pendiméthaline et/ou
(B2) des herbicides actifs contre des plantes nuisibles dicotylédones, à action surtout sur les feuilles, choisis dans le groupe constitué par le bispyribac et ses sels et le pyrithiobac et ses sels et/ou
(B3) des herbicides actifs contre des plantes nuisibles monocotylédones, à action surtout sur les feuilles, choisis dans le groupe constitué par le quizalofop-P-éthyle, le fénoxaprop-P-éthyle et le fluazifop-P-éthyle et/ou
(B4) des herbicides actifs contre des plantes nuisibles surtout monocotylédones à action sur les feuilles et le sol, choisis dans le groupe constitué par le séthoxydime, le cycloxydime et le cléthodime, et les cultures de coton sont tolérantes, éventuellement en présence de phytoprotecteurs, aux herbicides (A) et (B) contenus dans l'association.

**2.** Utilisation d'associations d'herbicides pour la lutte contre des plantes nuisibles dans des cultures de coton, **caractérisée en ce que** l'association d'herbicides respective présente une teneur efficace en

(A) l'herbicide à large spectre glyphosate-isopropylammonium
et
(B) un herbicide choisi dans le groupe des composés qui consiste en

(B1) des herbicides actifs contre des plantes nuisibles monocotylédones et surtout dicotylédones, à action sur les feuilles et sur le sol, choisis dans le groupe constitué par la clomazone et le linuron et/ou
(B3) des herbicides actifs contre des plantes nuisibles monocotylédones, à action surtout sur les feuilles, choisis dans le groupe constitué par le quizalofop-P-éthyle et le fénoxaprop-P-éthyle et le fluazifop-P-éthyle et/ou
(B4) des herbicides actifs contre des plantes nuisibles surtout monocotylédones, à action sur les feuilles et le sol, choisis dans le groupe constitué par le cycloxydime,

et les cultures de coton sont tolérantes, éventuellement en présence de phytoprotecteurs, aux herbicides (A) et (B) contenus dans l'association.

**3.** Utilisation selon la revendication 1, **caractérisée en ce qu'**on choisit comme substance active (A) le glufosinate et ses sels.

**4.** Utilisation selon la revendication 1 ou 3, **caractérisée en ce qu'**on utilise comme substance active (A) le glufosinate-ammonium.

**5.** Utilisation selon l'une quelconque des revendications 1 à 4, **caractérisée en ce que** l'association d'herbicides contient d'autres substances actives de produits phytosanitaires.

**6.** Utilisation selon l'une quelconque des revendications 1 à 5, **caractérisée en ce que** les associations d'herbicides sont utilisées avec des auxiliaires de formulation et adjuvants usuels dans la protection des plantes.

**7.** Procédé pour la lutte contre des plantes nuisibles dans des cultures de coton tolérantes, **caractérisé en ce qu'**on applique les herbicides de l'association d'herbicides, définie conformément à une ou plusieurs des revendications 1 à 6, ensemble ou séparément, en pré-levée, post-levée ou en pré- et post-levée sur les plantes, parties de plantes, semences ou sur l'aire de culture.

**8.** Composition herbicide, **caractérisée en ce qu'**en plus d'un herbicide (A) choisi dans le groupe des composés de formule (A1),

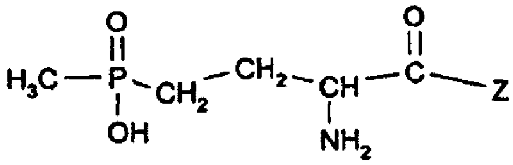

(A1)

dans laquelle Z représente un radical de formule -OH ou un radical peptidique de formule - $NHCH(CH_3)CONHCH(CH_3)COOH$, et leurs sels,
elle contient une substance active herbicide (B) choisie dans le groupe qui consiste en

(B2') des herbicides actifs contre des plantes nuisibles dicotylédones, à action surtout sur les feuilles, choisis dans le groupe constitué par le bispyribac et ses sels et le pyrithiobac et ses sels et/ou
(B3') des herbicides actifs contre des plantes nuisibles monocotylédones, à action surtout sur les feuilles, choisis dans le groupe constitué par le quizalofop-P-éthyle

et éventuellement des auxiliaires de formulation et adjuvants usuels dans la protection des plantes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9809525 A
- EP 252237 A
- WO 9632013 A
- WO 9622692 A
- WO 9945781 A
- WO 97131535 A
- US 4671819 A
- US 5183492 A
- EP 496701 A
- DE 2856260 A
- WO 9208353 A
- EP 0252237 A
- EP 0242246 A
- EP 242236 A
- EP 257542 A
- EP 275957 A
- EP 0513054 A
- WO 9200377 A
- EP 115673 A
- EP 409815 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A
- EP 0476555 A
- EP 0048436 A
- EP 0336151 A
- US 4400196 A
- EP 0502014 A


### In der Beschreibung aufgeführte Nicht-Patentliteratur


- The Pesticide Manual. British Crop Protection Council, 1997, 643-645
- The Pesticide Manual. British Crop Protection Council, 1997, 120-121
- *Zuckerrübe,* 1998, vol. 47, 217
- The Pesticide Manual. British Crop Protection Council, 1997, 646-649
- The Pesticide Manual. British Crop Protection Council, 1997
- **SAMBROOK et al.** Molecular Cloning, A Laboratory Manual. Cold Spring Harbor Laboratory Press, 1989
- **WINNACKER.** Gene und Klone. VCH, 1996
- **CHRISTOU.** *Trends in Plant Science,* 1996, vol. 1, 423-431
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J,* 1991, vol. 1, 95-106
- **WINNACKER-KÜCHLER.** Chemische Technologie. C. Hauser Verlag, 1986, vol. 7
- **VAN VALKENBURG.** Pesticide Formulations. Marcel Dekker, 1973
- **K. MARTENS.** Spray Drying Handbook. G. Goodwin Ltd. London, 1979
- **WATKINS.** Handbook of Insecticide Dust Diluents and Carriers. Darland Books
- **H.V. OLPHEN.** Introduction to Clay Colloid Chemistry. J. Wiley & Sons
- **MARSDEN.** Solvents Guide. Interscience, 1950
- **MCCUTCHEON'S.** Detergents and Emulsfiers Annual. MC Publ. Corp,
- **SISLEY ; WOOD.** Encyclopedia of Surface Active Agents. Chem. Publ. Co. Inc, 1964
- **SCHÖNFELDT.** Grenzflächenaktive Äthylenoxidaddukte. Wiss. Verlagsgesellschaft, 1976
- Factors Affecting Herbicidal Activity and Selectivity. *Proc. EWRS Symp.,* 1988, 227-232
- **S. R. COLBY.** *Weeds,* 1967, vol. 15, 20-22